# EUROPÄISCHE PATENTSCHRIFT

(11) **EP 2 884 112 B1**
(45) Veröffentlichungstag und Bekanntmachung des Hinweises auf die Patenterteilung: **21.02.2018**
(21) Anmeldenummer: 14186559.2
(22) Anmeldetag: 26.09.2014
(51) Int. Cl.: F04D 19/04, F04D 27/00, F04D 29/063, G01F 1/708

(54) **Pumpe**
Pump
Pompe

(30) Priorität: 12.12.2013 DE 102013113904
(43) Veröffentlichungstag der Anmeldung: 17.06.2015
(73) Patentinhaber: PFEIFFER VACUUM GMBH, 35614 Asslar (DE)
(72) Erfinder: Emrich, Ulrich, 35753 Greifenstein (DE); Stammler, Herbert, 35396 Gießen (DE)
(74) Vertreter: Manitz Finsterwald Patentanwälte PartmbB

(56) Entgegenhaltungen:
- US-A- 3 739 636
- US-A- 3 987 671
- US-A- 4 990 794
- US-A1- 2002 098 089
- US-A1- 2007 191 990

## Beschreibung

Die vorliegende Erfindung betrifft eine Vakuumpumpe mit wenigstens einem Förderkanal für ein flüssiges Betriebsmittel, insbesondere ein Schmiermittel, und ein Verfahren zur Überwachung einer Strömung des Betriebsmittels.

Bei einer derartigen Pumpe kann es erwünscht oder erforderlich sein, eine Strömung des Betriebsmittels im Förderkanal zu erfassen. Dabei ist es bekannt, zur Erfassung der Betriebsmittelströmung eine optische Messung mit polarisiertem Licht durchzuführen. Derartige Messungen sind relativ aufwendig und kompliziert. Außerdem setzen derartige Messungen eine weitgehende optische Reinheit des Betriebsmittels voraus, so dass sie bei einem verschmutzten Betriebsmittel nicht zuverlässig eingesetzt werden können. Andere gängige Messverfahren basieren auf einer mechanischen oder thermischen Durchflussmessung, die allerdings einen bestimmten Mindestdurchfluss an Betriebsmittel voraussetzen.

Die US 2002/0098089 A1 beschreibt eine Förderpumpe für eine Flüssigkeit, bei der ein flüssiges Betriebsmittel zur Kühlung eines Lagers durch einen Förderkanal in eine Kammer und aus der Kammer in einen Rücklaufkanal strömt. Im Rücklaufkanal ist ein Sensor zur Detektion einer Gasblase angeordnet.

Der vorliegenden Erfindung liegt die Aufgabe zugrunde, eine Vakuumpumpe bereitzustellen, bei der eine Betriebsmittelströmung besonders einfach und zuverlässig erfasst werden kann. Außerdem liegt der vorliegenden Erfindung die Aufgabe zugrunde, ein einfach ausführbares Verfahren zur Überwachung einer Betriebsmittelströmung bereitzustellen.

Die Aufgabe wird durch eine Vakuumpumpe mit den Merkmalen des Anspruchs 1 bzw. durch ein Verfahren mit den Merkmalen des Anspruchs 14 gelöst. Bevorzugte Ausführungsformen und Weiterbildungen der Erfindung werden in den abhängigen Ansprüchen beschrieben.

Die erfindungsgemäße Pumpe, bei der es sich um eine Vakuumpumpe handelt, weist wenigstens einen Förderkanal für ein flüssiges Betriebsmittel und eine Messeinrichtung auf, mittels der wenigstens eine in dem Betriebsmittel mitströmende Gasblase detektierbar ist.

Der vorliegenden Erfindung liegt somit der Gedanke zugrunde, die Betriebsmittelströmung durch Detektion der mitströmenden Gasblase zu erfassen. Vorteilhaft daran ist insbesondere, dass die Gasblase unabhängig von der Strömungsgeschwindigkeit und vom Reinheitsgrad des Betriebsmittels detektiert werden kann, so dass auch bei geringen Strömungsgeschwindigkeiten und/oder bei einem verhältnismäßig starken Verschmutzungsgrad des Betriebsmittels eine Betriebsmittelströmung nachgewiesen werden kann. Außerdem kann die Gasblase insbesondere im Vergleich zu einer optischen Messung mit polarisiertem Licht verhältnismäßig einfach im Betriebsmittel nachgewiesen werden.

Bevorzugt ist eine einzelne Gasblase detektierbar. Dadurch wird es möglich, die Betriebsmittelströmung selbst bei einer nur geringen Anzahl an Gasblasen im Betriebsmittel zu erfassen. Außerdem können Störungen, die von mehreren gleichzeitig detektierten Gasblasen hervorgerufen werden, vermieden werden.

Bei einer bevorzugten Ausgestaltung der Erfindung weist die Messeinrichtung wenigstens einen Sensor auf, mittels dem die Gasblase optisch oder thermisch erfasst werden kann. Bei dem Sensor kann es sich somit um einen thermischen oder optischen Sensor handeln.

Der Sensor kann an einem Abschnitt des Förderkanals angeordnet sein. Der Förderkanalabschnitt kann insbesondere dann transparent ausgestaltet sein, wenn es sich um einen optischen Sensor handelt. Der optische Sensor kann dazu ausgebildet sein, die Gasblase mittels einer Detektion einer Änderung der optischen Durchlässigkeit des Betriebsmittels zu detektierten. Dabei wird angenommen, dass eine Gasblase, wenn sie durch den Erfassungsbereich des Sensors strömt, eine Veränderung der optischen Durchlässigkeit bewirkt, die mittels des Sensors erfasst wird.

Der optische Sensor kann eine Lichtquelle und einen Empfänger für Licht von der Lichtquelle aufweisen, wobei der Förderkanalabschnitt zwischen der Lichtquelle und dem Empfänger derart angeordnet ist, dass das Licht den Förderkanalabschnitt quer zur Strömungsrichtung durchqueren und vom Empfänger detektiert werden kann. Eine Änderung der Durchlässigkeit bzw. der Transparenz des Betriebsmittels kann durch eine Änderung der Intensität des detektierten Lichts nachgewiesen werden. Dabei kann angenommen werden, dass eine detektierte Intensitätsänderung von einer den Erfassungsbereich des Sensors durchströmenden Gasblase bewirkt wurde.

Bei dem Sensor kann es sich auch um einen thermischen Sensor handeln, der an einem Abschnitt des Förderkanals angeordnet sein kann. Dabei wird angenommen, dass die Gasblase andere thermische Eigenschaften als das Betriebsmittel aufweist und daher über den thermischen Sensor erfasst werden kann.

Nach einer bevorzugten Weiterbildung der Erfindung ist die Messeinrichtung dazu ausgebildet, anhand der Gasblase wenigstens eine die Strömung im Förderkanal charakterisierende physikalische Größe, wie etwa eine Strömungsgeschwindigkeit, einen Volumenstrom und/oder einen Massenstrom, zu ermitteln. Dabei wird angenommen, dass die Strömungsgeschwindigkeit der Gasblase der Strömungsgeschwindigkeit des Betriebsmittels entspricht. Anhand der Bestimmung der Strömungsgeschwindigkeit der Gasblase kann somit auf die Strömungsgeschwindigkeit des Betriebsmittels geschlossen werden, mittels der wiederum ein Volumenstrom und/oder ein Massenstrom für das Betriebsmittel berechnet werden kann. Dabei kann angenommen werden, dass die Strömungsgeschwindigkeit der Gasblase der Strömungsgeschwindigkeit des Betriebsmittels entspricht oder dass die beiden Strömungsgeschwindigkeiten zumindest in einer vorgegebenen bekannten Beziehung zueinander stehen.

Nach einer bevorzugten Ausgestaltung der Erfindung ist die Messeinrichtung dazu ausgebildet, die Gasblase zu detektieren, wenn sie wenigstens einen ersten Abschnitt und einen zweiten Abschnitt des Förderkanals, der stromabwärts des ersten Förderkanalabschnitts liegt, durchströmt, und die Zeitspanne zwischen der jeweiligen Detektion der Gasblase zu messen. Die Gasblase kann somit an wenigstens zwei Stellen im Förderkanal nachgewiesen und die dazwischenliegende Zeitspanne erfasst werden.

Die Messeinrichtung kann dazu ausgebildet sein, die Strömungsgeschwindigkeit der Gasblase und/oder des Betriebsmittels in Abhängigkeit von einem Abstand zwischen den beiden Förderkanalabschnitten und der Zeitspanne zu bestimmen, insbesondere als Quotient aus dem Abstand und der Zeitspanne. Die Strömungsgeschwindigkeit der Gasblase kann somit auf einfache Weise ermittelt werden. Ferner kann angenommen werden, dass die Strömungsgeschwindigkeit der Gasblase der Strömungsgeschwindigkeit der Betriebsmittelströmung entspricht, die somit auf einfache Weise bestimmt werden kann.

Nach einer alternativen Ausgestaltung kann die Messeinrichtung dazu ausgebildet sein, in wenigstens einem Abschnitt des Förderkanals die Strömungsgeschwindigkeit der Gasblase zu messen. Die Strömungsgeschwindigkeit kann somit auch in nur einem Förderkanalabschnitt bestimmt werden.

Die Messeinrichtung kann dazu ausgebildet sein, anhand des Produkts aus der Strömungsgeschwindigkeit und der, insbesondere konstanten, Querschnittsfläche des Förderkanals einen Volumenstrom und/oder einen Massenstrom des Betriebsmittels zu berechnen. Der Volumenstrom und/oder der Massenstrom lassen sich somit in einfacher Weise bestimmen. Dabei ist die Querschnittsfläche des Förderkanals bevorzugt vorgegeben und somit bekannt.

Vorzugsweise ist eine Gasblasenerzeugungseinrichtung zur Erzeugung von, insbesondere einzeln auftretenden, Gasblasen vorgesehen. Bei Inbetriebnahme der Pumpe setzt normalerweise ein Entgasungsvorgang ein, so dass anfänglich Gasblasen im Betriebsmittel vorhanden sind. Beim normalen bzw. kontinuierlichen Betrieb der Pumpe sind normalerweise keine Gasblasen mehr vorhanden. Die Gasblasenerzeugungseinrichtung bietet daher den Vorteil, dass bei Bedarf Gasblasen im Betriebsmittel erzeugt werden können.

Zur Erzeugung von, insbesondere einzeln auftretenden, Gasblasen ist vorzugsweise ein in den Förderkanal mündender Seitenkanal vorgesehen. Über den Seitenkanal können Gasblasen in den Förderkanal und somit in das Betriebsmittel eingebracht werden.

Dabei ist es besonders vorteilhaft, wenn der Seitenkanal an eine Gasquelle, insbesondere für Sperrgas, wie etwa Stickstoff, angeschlossen oder anschließbar ist. Dadurch können die Gasblasen von der Gasquelle über den Seitenkanal in den Förderkanal gelangen.

Bevorzugt weist der Seitenkanal, insbesondere im Bereich seiner Mündung in den Förderkanal, eine Kapillare auf. Durch den kapillarartig ausgebildeten Mündungsbereich kann erreicht werden, dass jeweils eine einzelne Gasblase in den Förderkanal gelangt. Es können somit jeweils einzeln auftretende Gasblasen im Betriebsmittel erzeugt werden, die sich in einem gewissen Abstand zueinander von der Kapillare lösen und somit entsprechend zeitlich versetzt in der Betriebsmittelströmung nachgewiesen werden können.

Mit dem Begriff "einzelne Gasblase" wird daher bevorzugt auf eine einzige Gasblase abgestellt, die jeweils von der Messeinrichtung erfasst wird, ohne dass weitere Gasblasen im Erfassungsbereich der Messeinrichtung vorhanden sind. Erst nachdem die einzige Gasblase erfasst wurde und sich somit stromabwärts der Messeinrichtung befindet, erfolgt daher bevorzugt die Erfassung einer weiteren Gasblase.

Der Seitenkanal kann wenigstens ein Absperrorgan aufweisen. Die Möglichkeit der Erzeugung von Gasblasen über den Seitenkanal kann somit bei Bedarf je nach Stellung des Absperrorgans ein- oder ausgeschaltet werden. Bevorzugt handelt es sich dabei bei dem Absperrorgan um ein manuell oder elektrisch betätigbares Absperrventil.

Nach einer bevorzugten Weiterbildung der Erfindung weist die Pumpe einen Rotor und ein Drehlager auf, das zur drehbaren Unterstützung des Rotors über den Förderkanal mit dem Betriebsmittel versorgbar ist. Bei dem Drehlager handelt es sich insbesondere um ein Wälzlager. Die Betriebsmittelversorgung für das Drehlager kann dabei über die Detektion der Gasblasen, wie vorstehend beschrieben, überwacht werden.

Der Rotor kann einen, insbesondere konischen, Förderabschnitt zur Förderung des Betriebsmittels zu dem Drehlager aufweisen, und der Förderkanal kann in der Umgebung des Führungsabschnitts einen Auslass für das Betriebsmittel aufweisen. Der Führungsabschnitt kann somit über den Auslass mit Betriebsmittel aus dem Förderkanal versorgt werden. Dabei kann der Förderabschnitt bevorzugt einen zum Drehlager hin größer werdenden Außendurchmesser aufweisen.

Eine bevorzugte Weiterbildung der Erfindung sieht vor, dass im Förderkanal eine Förderpumpe zur Förderung des Betriebsmittels angeordnet und/oder der Förderkanal an einen Betriebsmittelspeicher angeschlossen ist. Bevorzugt weist die Förderpumpe Mittel zur Einstellung der Förderleistung der Förderpumpe auf. Die Förderleistung kann dabei in Abhängigkeit von einem über die Detektion der Gasblase gewonnenen physikalischen Parameter gesteuert oder geregelt werden.

Bei der Vakuumpumpe kann es sich insbesondere um eine Turbomolekularpumpe handeln.

Die Erfindung betrifft auch ein Verfahren zur Überwachung einer Strömung eines flüssigen Betriebsmittels in einer Vakuumpumpe, insbesondere einer erfindungsgemäßen Pumpe, wobei das Verfahren umfasst, dass wenigstens eine Gasblase detektiert wird, die in der Strömung des Betriebsmittels durch einen Förderkanal der Pumpe mitströmt.

Bevorzugt wird wenigstens eine die Strömung im Förderkanal charakterisierende Größe anhand der Gasblase bestimmt. Vorzugsweise wird die Strömungsgeschwindigkeit der Gasblase bestimmt und es wird angenommen, dass die Strömungsgeschwindigkeit des Betriebsmittels der Strömungsgeschwindigkeit der Gasblase entspricht. Es kann aber auch angenommen werden, dass die Strömungsgeschwindigkeit der Gasblase und die Strömungsgeschwindigkeit der Betriebsmittelströmung in einer vorgegebenen bekannten Beziehung zueinander stehen. Besonders bevorzugt werden anhand der Strömungsgeschwindigkeit des Betriebsmittels ein Volumenstrom und/oder ein Massenstrom des Betriebsmittels berechnet.

Nachfolgend wird die Erfindung beispielhaft anhand vorteilhafter Ausführungsformen unter Bezugnahme auf die beigefügten Figuren beschrieben. Es zeigen,
- Fig. 1: eine Vakuumpumpe gemäß einer erfindungsgemäßen Variante in schematischer Darstellung,
- Fig. 2: eine Vakuumpumpe gemäß einer zweiten erfindungsgemäßen Variante in schematischer Darstellung,
- Fig. 3: ein Intensitäts-Zeit-Diagramm mit Signalen von bei der Vakuumpumpe der Fig. 2 detektierten Gasblasen,
- Fig. 4: eine Vakuumpumpe gemäß einer dritten erfindungsgemäßen Variante in schematischer Darstellung.

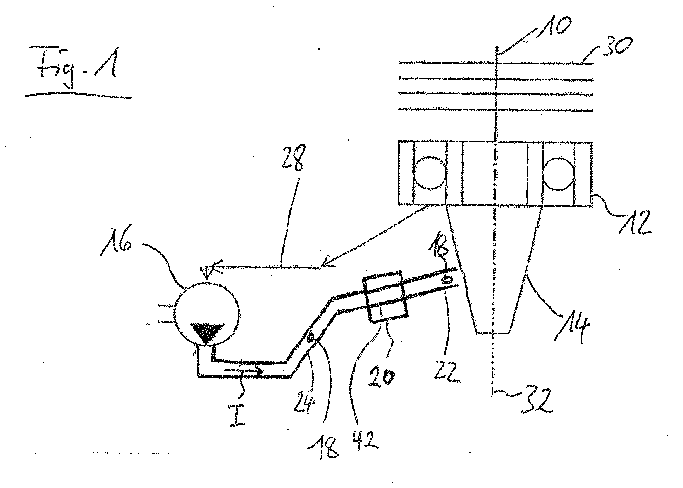

Die in Fig. 1 schematisch dargestellte Vakuumpumpe umfasst einen Rotor 10, der durch ein Drehlager 12, wie etwa ein Wälzlager, um eine Drehachse 32 drehbar unterstützt ist. Der Rotor 10 umfasst eine nur schematisch dargestellte Rotorwelle und mehrere an der Rotorwelle angeordnete ebenfalls nur schematisch angedeutete turbomolekulare Rotorscheiben 30. Die radial zu der Rotorwelle verlaufenden Rotorscheiben 30 liegen jeweils einer von mehreren zwischen den Rotorscheiben 30 angeordneten Statorscheiben gegenüber, die in Fig. 1 nicht dargestellt sind, und bilden mit den Statorscheiben eine turbomolekulare Pumpstufe.

An dem von den Rotorscheiben 30 abgewandten Ende der Rotorwelle ist ein mit der Rotorwelle drehfest verbundener konischer Förderabschnitt 14 vorgesehen, der koaxial zu der Drehachse 32 verläuft und einen zum Drehlager 12 hin zunehmenden Außendurchmesser aufweist.

Zur Versorgung des Drehlagers 12 mit einem flüssigen Betriebsmittel, wie etwa einem Schmiermittel, ist eine Förderpumpe 16 vorgesehen, die das an ihrem Einlass zur Verfügung stehende Betriebsmittel in einen Förderkanal 24 fördert, welcher sich in Richtung des Förderabschnitts 14 erstreckt. Das dem Förderabschnitt 14 zugewandte Ende des Förderkanals 24 bildet einen Auslass 22 für das Betriebsmittel, von dem aus das Betriebsmittel auf den Förderabschnitt 14 gelangt.

Durch die bei der Rotation des Förderabschnitts 14 wirkende Zentrifugalkraft und die kapillare Wirkung wird das Betriebsmittel in Richtung des zunehmenden Außendurchmessers des Förderabschnitts 14 und folglich zu dem Drehlager 12 hin gefördert, wo es seine für den Betrieb des Drehlagers 12 notwendige, insbesondere schmierende, Funktion erfüllt.

Wie in Fig. 1 durch Pfeile dargestellt ist, umfasst die Vakuumpumpe eine Einrichtung zur Förderung des Betriebsmittels von dem Drehlager 12 zurück zu der Förderpumpe 16, so dass das Betriebsmittel in einem geschlossenen Kreislauf 28 gefördert wird.

Bei bestimmungsgemäßem Gebrauch der Vakuumpumpe wird das Betriebsmittel mittels der Förderpumpe 16 in dem Förderkanal 24 gefördert. Dadurch stellt sich längs des Förderkanals 24 eine in Strömungsrichtung I gerichtete Strömung des Betriebsmittels ein. Es kann gewünscht oder erforderlich sein, die Strömung des Betriebsmittels zu detektieren, zum Beispiel zur Überwachung, ob tatsächlich eine Betriebsmittelströmung vorhanden ist. Somit kann gewissermaßen die Funktionstüchtigkeit der Förderpumpe 16 überprüft werden, indem festgestellt wird, ob das Betriebsmittel im Förderkanal 24 tatsächlich strömt. Außerdem kann es gewünscht oder erforderlich sein, eine mit der Betriebsmittelströmung in Zusammenhang stehende physikalische Größe, wie etwa eine Strömungsgeschwindigkeit, einen Volumenstrom und/oder einen Massenstrom, zu bestimmen.

Dazu ist bei der Vakuumpumpe der Fig. 1 eine Messeinrichtung 20 am Förderkanal 24 angeordnet, mittels der wenigstens eine mit dem Betriebsmittel mitströmende Gasblase 18 detektiert werden kann. Anhand der detektierten Gasblase 18 kann zum Beispiel festgestellt werden, dass das Betriebsmittel tatsächlich strömt und es kann auch wenigstens eine physikalische Größe ermittelt werden, die mit der Betriebsmittelströmung im Zusammenhang steht.

Die Messeinrichtung 20 umgibt bei dem mit Bezug auf Fig. 1 beschriebenen Beispiel einen Abschnitt 42 des Förderkanals 24. Der Förderkanalabschnitt 42 kann zum Beispiel durchsichtig ausgebildet sein, so dass der Förderkanalabschnitt 42 von außen mittels eines optischen Sensors (nicht gezeigt) der Messeinrichtung 20 überwacht und eine Gasblase 18, die den Förderkanalabschnitt 42 durchströmt, optisch erfasst werden kann.

Die optische Erfassung der Gasblase 18 kann dabei zum Beispiel auf einer Bilderkennung beruhen. Mittels des optischen Sensors wird dabei, etwa mit einer Rate von mehreren Bildern pro Sekunde, eine Abfolge von Bildern des Förderkanalabschnitts 42 aufgenommen. Die Bilder können dann mittels der Messeinrichtung 20 und einem Bilderkennungsalgorithmus auf Vorhandensein einer Gasblase 18 untersucht werden, so dass die Gasblase 18 über die Bilderkennung optisch erfasst und detektiert werden kann.

Außerdem kann anhand der aufgenommenen Abfolge von Bildern der Weg der Gasblase 18 durch den Förderkanalabschnitt 42 ermittelt werden. Somit kann zum Beispiel die Wegstrecke, die die Gasblase 18 zwischen nacheinander aufgenommenen Bildern zurückgelegt hat, ebenfalls über die Bilderkennung berechnet werden. Da die Rate bekannt ist, mit der die Bilder aufgenommen werden, kann die Messeinrichtung 20 anhand der ermittelten Wegstrecke und der Aufnahmerate der Bilder die Geschwindigkeit der Gasblase 18 ermitteln. Da davon ausgegangen werden kann, dass die Gasblase 18 mit dem Betriebsmittel mitströmt, entspricht die Geschwindigkeit der Gasblase 18 zumindest annähernd der Geschwindigkeit der Betriebsmittelströmung. Die Messeinrichtung 20 kann die Geschwindigkeit der Betriebsmittelströmung somit bestimmen unter der Annahme, dass diese der für die Gasblase 18 ermittelten Geschwindigkeit entspricht. Die Betriebsmittelströmungsgeschwindigkeit kann dann von der Messeinrichtung 20 zum Beispiel für eine nicht dargestellte Pumpensteuerung bereitgestellt werden.

Außerdem kann die Messeinrichtung 20 dazu ausgebildet sein, aus der ermittelten Strömungsgeschwindigkeit einen Volumenstrom des Betriebsmittels zu ermitteln. Dazu weist der Förderkanal 24 zumindest im Bereich des Förderkanalabschnitts 42 vorzugsweise einen konstanten Querschnitt auf und der Volumenstrom wird als Produkt aus der Strömungsgeschwindigkeit und der Querschnittsfläche berechnet. Der Volumenstrom kann dann ebenfalls von der Messeinrichtung 20 zum Beispiel der erwähnten Pumpensteuerung bereitgestellt werden. Indem außerdem noch die Dichte des Betriebsmittels berücksichtigt wird, kann als Produkt der Dichte und des Volumenstroms außerdem noch ein Massenstrom des Betriebsmittels von der Messeinrichtung 20 berechnet werden. Der Massenstrom kann dann ebenfalls zum Beispiel der Pumpensteuerung zur Verfügung gestellt werden.

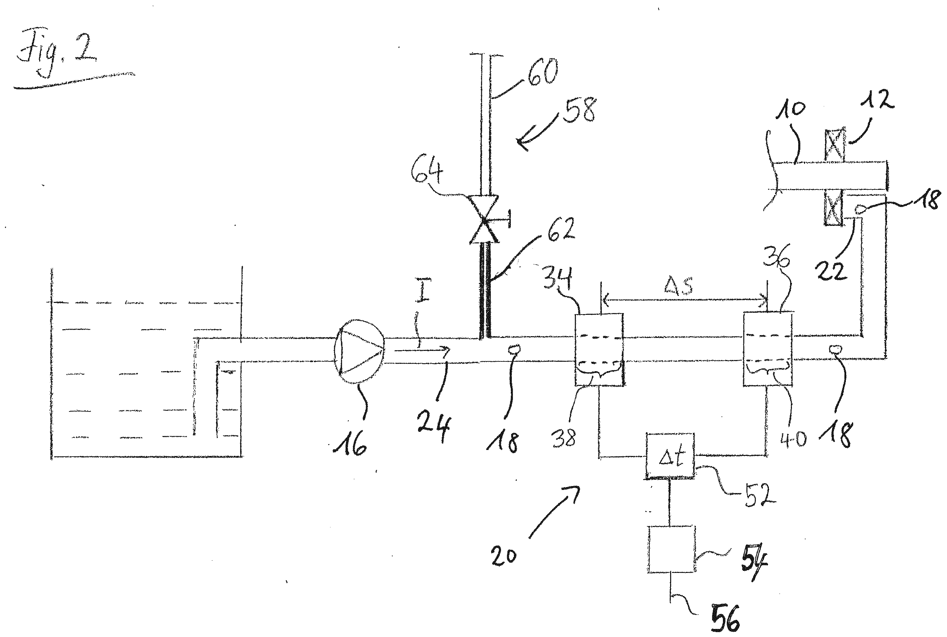

Bei der Variante der Fig. 2 weist die Messeinrichtung 20 einen ersten Sensor 34 und einen zweiten Sensor 36 auf, die jeweils am Förderkanal 24 angeordnet sind. Mit dem ersten Sensor 34 kann ein erster Abschnitt 38 des Förderkanals 24 und mit dem zweiten Sensor 36 kann ein zweiter Abschnitt 40 des Förderkanals 24 daraufhin überwacht werden, ob eine Gasblase 18 den jeweiligen Förderkanalabschnitt 38, 40 durchströmt.

Jeder der beiden Sensoren 34, 36 kann dabei als optischer Sensor und jeder der beiden Förderkanalabschnitte 38, 40 kann transparent ausgestaltet sein, so dass eine Gasblase 18, die den jeweiligen Förderkanalabschnitt 38, 40 durchströmt, von dem jeweiligen außerhalb des Förderkanals 24 angebrachten Sensor 34, 36 optisch erfasst werden kann. Die optische Erfassung kann zum Beispiel - wie vorstehend bereits bzgl. der Variante der Fig. 1 beschrieben wurde - über eine Bildverarbeitung erfolgen.

Alternativ kann jeder Sensor 34, 36 dazu ausgestaltet sein, eine Änderung in der Helligkeit und/oder eine Farbänderung im erfassten Förderkanalabschnitt 38, 40 zu detektieren, wobei eine derartige erfasste Änderung einer Gasblase 18 zugeordnet wird. D.h. bei einer erfassten Helligkeits- oder Farbänderung wird angenommen, dass diese von einer Gasblase 18 verursacht wurde.

Jeder Sensor 34, 36 kann eine Lichtquelle und einen Detektor für Licht aus der Lichtquelle aufweisen. Der jeweilige Förderkanalabschnitt 38, 40 kann dabei zwischen dem jeweiligen Detektor und der Lichtquelle angeordnet sein. Wenn die Gasblase 18 den jeweiligen Förderkanalabschnitt 38, 40 durchströmt, so bewirkt die Gasblase 18 eine Änderung in der Lichtdurchlässigkeit, die anhand einer Veränderung der Intensität des detektierten Lichts nachgewiesen werden kann. Wenn eine derartige Intensitätsänderung gemessen wird, kann somit auf eine durchströmende Gasblase 18 geschlossen werden, die somit erfasst werden kann.

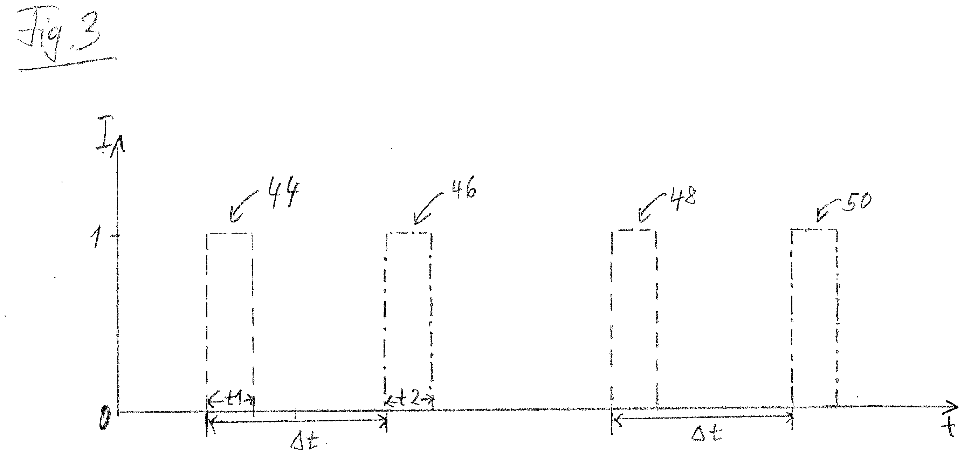

In dem Intensitäts-Zeit-Diagramm der Fig. 3 sind längs der Abszissenachse die Zeit (t) und längs der Ordinatenachse die Signalintensität (I) dargestellt. Eine Gasblase 18, die den ersten stromabwärtigen Förderkanalabschnitt 38 durchströmt, kann - wie erwähnt - beispielsweise vom ersten Sensor 34 in Form einer Intensitätsänderung erfasst werden, die die im Betriebsmittel mitströmende Gasblase 18 für eine Zeitdauer t1 bewirkt. Das entsprechende vom ersten Sensor 34 erzeugte erste Signal 44 ist in Fig. 3 eingezeichnet.

In der entsprechenden Weise kann der zweite Sensor 36 die Gasblase 18 erfassen, während sie den zweiten Förderkanalabschnitt 40 durchströmt und dabei für eine Zeitdauer t2 eine Änderung der erfassten Intensitätsverteilung bewirkt. Das entsprechende zweite Signal 46 vom zweiten Sensor 36 ist in Fig. 3 ebenfalls eingezeichnet.

Wie Fig. 3 zeigt, liegt zwischen der Erfassung des ersten Signals 44 und des zweiten Signals 46 eine Zeitspanne Δt, die daher rührt, dass der zweite Sensor 36 eine Wegstrecke Δs stromabwärts zum ersten Sensor 34 vorgesehen ist. Die Zeitspanne Δt kann von einer Zeitermittlungseinrichtung 52 der Messeinrichtung 20 detektiert werden. Eine Berechnungseinrichtung 54 der Messeinrichtung 20 kann aus dem Quotienten aus der Wegstrecke Δs und der Zeitspanne Δt die Strömungsgeschwindigkeit der Gasblase 18 und somit die Strömungsgeschwindigkeit des Betriebsmittels berechnen. Ferner kann aus dem Produkt der Strömungsgeschwindigkeit und der Querschnittsfläche des Förderkanals 24 ein Volumenstrom für die Betriebsmittelströmung berechnet werden. Aus dem Produkt aus Volumenstrom und der Dichte des Betriebsmittels kann außerdem ein Massenstrom für die Betriebsmittelströmung berechnet werden. Wenigstens eine der ermittelten physikalischen Größen Strömungsgeschwindigkeit, Volumenstrom und Massenstrom kann von der Messeinrichtung 20 bereitgestellt werden, zum Beispiel über einen elektronischen Ausgang 56.

Zu einem späteren Zeitpunkt kann eine weitere Gasblase 18 zuerst von dem ersten Sensor 34 und anschließend von dem zweiten Sensor 36 detektiert werden. Dabei sind das vom ersten Sensor 34 erzeugte dritte Signal 48 und das vom zweiten Sensor 36 erzeugte vierte Signal 50 in Fig. 3 dargestellt. Mittels der Zeitermittlungseinrichtung 52 kann wiederum die Zeitspanne Δt zwischen der Detektion der beiden Signale 48, 50 ermittelt werden. Die Berechnungseinrichtung 46 kann außerdem die Strömungsgeschwindigkeit der Gasblase 18 und somit die entsprechende Strömungsgeschwindigkeit des Betriebsmittels und vorzugsweise den Volumenstrom und/oder den Massenstrom für die Betriebsmittelströmung berechnen. Wenigstens eine der ermittelten physikalischen Größen Strömungsgeschwindigkeit, Volumenstrom und Massenstrom kann dann wiederum über den elektronischen Ausgang 56 bereitgestellt werden.

Wie vorstehend beschrieben wurde, können die physikalischen Größen Strömungsgeschwindigkeit, Volumenstrom und Massenstrom für die Betriebsmittelströmung bei der Variante der Fig. 2 unter Verwendung der beiden Sensoren 34, 36 bestimmt werden. Dabei ist es bevorzugt, wenn nur einzelne Gasblasen 18 in der Betriebsmittelströmung auftreten, da diese ohne Störung durch andere Gasblasen zeitlich nacheinander von den beiden Sensoren 34, 36 erfasst werden kann.

Beim kontinuierlichen Betrieb der Vakuumpumpe kommen eigentlich keine Gasblasen 18 im Betriebsmittel vor. Daher ist eine Gasblasenerzeugungseinrichtung 58 vorgesehen, die einen Seitenkanal 60 aufweist, der stromaufwärts der Messeinrichtung 20 in den Förderkanal 24 mündet. Der Seitenkanal 60 ist im Bereich seiner Mündung in den Förderkanal 24 als Kapillare 62 ausgebildet und an seinem vom Förderkanal 24 abgewandten Ende mit einem Sperrgasspeicher (nicht gezeigt) verbunden. Außerdem ist im Seitenkanal 60 ein Absperrorgan 64 angeordnet.

Bei geöffnetem Absperrorgang 64 kann Sperrgas durch den Seitenkanal 60 in den Förderkanal 24 gelangen und dort Gasblasen 18 bilden. Durch die Kapillare 62 kann dabei erreicht werden, dass sich jeweils eine einzelne Gasblase 18 bildet, die dann, wie vorstehend beschrieben wurde, von den Sensoren 34, 36 detektiert werden kann. Durch die Gasblasenerzeugungseinrichtung 58 können somit bei Bedarf Gasblasen 18 im Betriebsmittel erzeugt werden.

Im Gegensatz zum kontinuierlichen Betrieb sind zu Beginn des Pumpenbetriebs normalerweise Gasblasen 18 im Betriebsmittel vorhanden, da das Betriebsmittel anfänglich entgast. Zu Beginn des Pumpenbetriebs müssen somit keine Gasblasen 18 mittels der Gasblasenerzeugungseinrichtung 58 erzeugt werden. Das Absperrorgan 54 kann dann geschlossen sein.

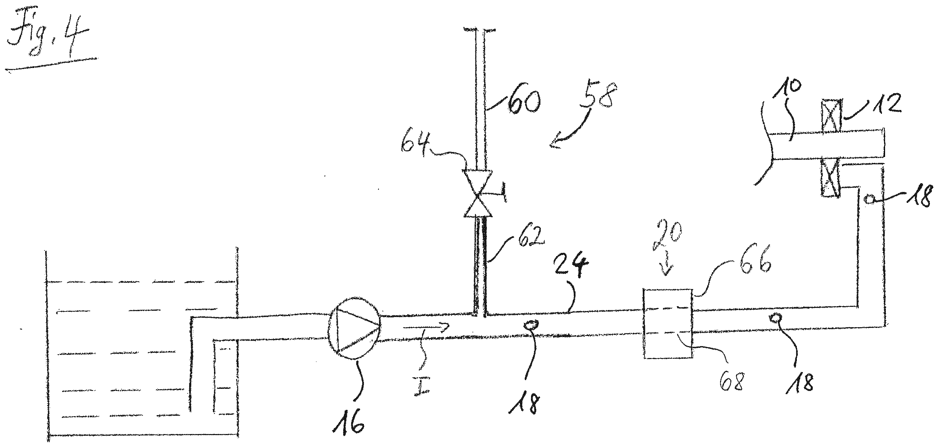

Bei der Variante der Fig. 4 weist die Messeinrichtung 20 einen Sensor 66 auf, mittels dem eine Gasblase 18 in einem Abschnitt 68 des Förderkanals 24, den der Sensor 60 umgibt, detektierbar ist. Der Sensor 66 ist dabei als thermischer Sensor ausgebildet. Er kann aber auch als optischer Sensor 66 ausgebildet sein wie die vorstehend beschriebenen Sensoren. Umgekehrt können die Sensoren der Varianten der Fig. 1 und 2 auch als thermische Sensoren ausgebildet sein.

Das Messprinzip des thermischen Sensors 66 beruht darauf, dass eine Gasblase 18 über eine Änderung der thermischen Eigenschaften der Betriebsmittelströmung detektiert wird. Insbesondere kann eine abrupte und kurzzeitige Temperaturänderung gemessen werden, die von der Gasblase 18 bewirkt wird, während sie durch den Förderkanalabschnitt 68 strömt. Beispielsweise kann die Zeitspanne erfasst werden, während die von der Gasblase 18 bewirkte Temperaturänderung von dem Sensor 66 gemessen wird. Die Geschwindigkeit der Gasblase 18 und somit die Strömungsgeschwindigkeit des Betriebsmittels kann dann zumindest näherungsweise berechnet werden aus dem Quotienten aus der Länge des Förderkanalabschnitts 68 und der gemessenen Zeitdauer. Wie vorstehend ausgeführt wurde, können unter Verwendung der Strömungsgeschwindigkeit ein Volumenstrom und/oder ein Massenstrom für das Betriebsmittel berechnet werden.

Der thermische Sensor 66 kann auch nach Art eines thermischen Massendurchflussmessers ausgeführt sein. Derartige Durchflussmesser werden auch als kalorimetrische Durchflussmesser bezeichnet. Dabei kann der thermische Sensor 66 zwei Temperaturfühler und ein Heizelement aufweisen (nicht gezeigt). Der stromaufwärts gelegene erste Temperaturfühler dient dabei als Referenzsensor während der stromabwärts gelegene zweite Temperaturfühler als Messsensor dient. Das Heizelement ist zwischen den beiden Temperaturfühlern angeordnet. Das Betriebsmittel umströmt daher zuerst den ersten Temperaturfühler, danach die Heizeinrichtung und anschließend den zweiten Temperaturfühler.

Bis auf die leichtesten Gase Wasserstoff und Helium weisen alle normalerweise üblichen bzw. typischen Gase, insbesondere auch Umgebungsluft und Stickstoff, eine etwa um eine Dekade geringere Wärmeleitfähigkeit als übliche bzw. typische Betriebsmittel, wie etwa Schmierstoffe auf mineralischer oder synthetischer Basis, auf.

Dieser Unterschied in der thermischen Leitfähigkeit kann zur Erfassung einer vorbeiströmenden Gasblase ausgenutzt werden. Dabei kann beim thermischen Erfassen einer Gasblase und bei Verwendung des als thermischer Massendurchflussmesser ausgebildeten Sensors 66 davon ausgegangen werden, dass nicht wie üblich eine Menge des Verschleppens der Wärmeenergie gemessen wird, sondern dass ein derartiges Verschleppen digital erfasst wird. Dabei wird das Heizelement bei einem geringen Durchfluss oder bei Vorhandensein von Betriebsmittel eine Verharrungstemperatur einnehmen, die direkt erfasst werden kann. Der Gleichanteil eines derart als Funktion der Zeit gewonnenen Temperaturverlaufs wird überwiegend von der Durchflussmenge und der Wärmeleitung des Förderkanals bestimmt. Kurzzeitig auftretende Wechselanteile im Temperaturverlauf, die auch in beiden Richtungen kurz hintereinander auftreten können, sind auf starke Veränderungen der Wärmeleitfähigkeit im Betriebsmittel zurückzuführen und können somit als Vorhandensein einer Gasblase gewertet werden.

Über die Gasblasenerzeugungseinrichtung 58 können wiederum Gasblasen in den Förderkanal 24 eingebracht werden, die über die Messeinrichtung 20 detektiert werden können.

Bei den vorstehend beschriebenen Varianten kann somit anhand der Detektion von Gasblasen 18 die Betriebsmittelströmung im Förderkanal 24 überwacht und es können die Strömung charakterisierende physikalische Größen, wie etwa die Strömungsgeschwindigkeit, der Volumenstrom und/oder der Massenstrom, berechnet werden.

Die Gasblasen 18 können dabei auch bei einer nur geringen Betriebsmittelströmung und/oder bei verschmutztem Betriebsmittel nachgewiesen werden.

### Bezugszeichenliste

- 10: Rotor
- 12: Wälzlager
- 14: Förderabschnitt
- 16: Förderpumpe
- 18: Gasblase
- 20: Messeinrichtung
- 22: Auslass
- 24: Förderkanal
- 28: Kreislauf
- 30: Rotorscheiben
- 32: Drehachse
- 34: erster Sensor
- 36: zweiter Sensor
- 38: erster Förderkanalabschnitt
- 40: zweiter Förderkanalabschnitt
- 42: Förderkanalabschnitt
- 44: erstes Signal
- 46: zweites Signal
- 48: drittes Signal
- 50: viertes Signal
- 52: Zeitermittlungseinrichtung
- 54: Berechnungseinrichtung
- 56: elektronischer Ausgang
- 58: Gasblasenerzeugungseinrichtung
- 60: Seitenkanal
- 62: Kapillare
- 64: Absperrorgan
- 66: Sensor
- 68: Förderkanalabschnitt

- I: Strömungsrichtung
- t1: erste Zeitdauer
- t2: zweite Zeitdauer
- Δt: Zeitspanne
- Δs: Wegstrecke

## Patentansprüche

1. Vakuumpumpe mit
wenigstens einem Förderkanal (24) für ein flüssiges Betriebsmittel, und einer Messeinrichtung (20), mittels der wenigstens eine in dem Betriebsmittel mitströmende Gasblase (18) detektierbar ist.

2. Pumpe nach Anspruch 1,
**dadurch gekennzeichnet, dass**
eine einzelne Gasblase (18) detektierbar ist.

3. Pumpe nach Anspruch 1 oder 2,
**dadurch gekennzeichnet, dass**
die Messeinrichtung (20) wenigstens einen Sensor (34, 36, 66) aufweist, mittels dem die Gasblase (18) optisch oder thermisch erfasst werden kann.

4. Pumpe nach einem der vorhergehenden Ansprüche,
**dadurch gekennzeichnet, dass**
die Messeinrichtung (20) dazu ausgebildet ist, anhand der Gasblase (18) wenigstens eine die Strömung im Förderkanal (24) charakterisierende physikalische Größe, wie etwa eine Strömungsgeschwindigkeit, einen Volumenstrom und/oder einen Massenstrom, zu ermitteln.

5. Pumpe nach einem der vorhergehenden Ansprüche,
**dadurch gekennzeichnet, dass**
die Messeinrichtung (20) dazu ausgebildet ist, die Gasblase (18) zu detektieren, wenn sie jeweils einen ersten Abschnitt (38) und einen zweiten Abschnitt (40) des Förderkanals (24) durchströmt, der stromabwärts des ersten Förderkanalabschnitts (38) liegt, und dabei die Zeitspanne zwischen der jeweiligen Detektion der Gasblase (18) zu messen.

6. Pumpe nach Anspruch 5,
**dadurch gekennzeichnet, dass**
die Messeinrichtung (20) dazu ausgebildet ist, die Strömungsgeschwindigkeit der Gasblase (18) und/oder des Betriebsmittels in Abhängigkeit von einem Abstand zwischen den beiden Förderkanalabschnitten (38, 40) und der Zeitspanne zu bestimmen, insbesondere als Quotient aus dem Abstand und der Zeitspanne.

7. Pumpe nach einem der vorhergehenden Ansprüche,
**dadurch gekennzeichnet, dass**
die Messeinrichtung (20) dazu ausgebildet ist, in wenigstens einem Abschnitt des Förderkanals (24) die Strömungsgeschwindigkeit der Gasblase (18) zu messen.

8. Pumpe nach Anspruch 6 oder 7,
**dadurch gekennzeichnet, dass**
die Messeinrichtung (20) dazu ausgebildet ist, anhand des Produkts aus der Strömungsgeschwindigkeit und der, insbesondere konstanten, Querschnittsfläche des Förderkanals (24) einen Volumenstrom und/oder einen Massenstrom des Betriebsmittels zu berechnen.

9. Pumpe nach einem der vorhergehenden Ansprüche,
**dadurch gekennzeichnet, dass**
eine Gasblasenerzeugungseinrichtung (58) zur Erzeugung von, insbesondere einzeln auftretenden, Gasblasen vorgesehen ist.

10. Pumpe nach einem der vorhergehenden Ansprüche,
**dadurch gekennzeichnet, dass** zur Erzeugung der Gasblasen (18) ein in den Förderkanal (24) mündender Seitenkanal (60) vorgesehen ist,
der an eine Gasquelle, insbesondere für Sperrgas, angeschlossen oder anschließbar ist, und/oder
der im Bereich seiner Mündung in den Förderkanal (24) eine Kapillare (62) aufweist, und/oder
der wenigstens ein Absperrorgan (64) aufweist.

11. Pumpe nach zumindest einem der vorhergehenden Ansprüche,
**dadurch gekennzeichnet, dass**
diese einen Rotor (10) und ein Drehlager (12) aufweist, das zur drehbaren Unterstützung des Rotors (10) über den Förderkanal (24) mit dem Betriebsmittel versorgbar ist.

12. Pumpe nach Anspruch 11,
**dadurch gekennzeichnet, dass**
der Rotor (10) einen, insbesondere konischen, Förderabschnitt (14) zur Förderung des Betriebsmittels zu dem Drehlager (12) aufweist, und der Förderkanal (24) in der Umgebung des Förderabschnitts (14) einen Auslass (22) für das Betriebsmittel aufweist,
wobei, bevorzugt, der Förderabschnitt (14) einen zum Drehlager (12) hin größer werdenden Außendurchmesser aufweist.

13. Pumpe nach einem der vorhergehenden Ansprüche,
**dadurch gekennzeichnet, dass**
im Förderkanal (24) eine Förderpumpe (16) zur Förderung des Betriebsmittels angeordnet und/oder der Förderkanal (24) an einen Betriebsmittelspeicher angeschlossen ist,
wobei, bevorzugt, die Förderpumpe (16) Mittel zur Einstellung der Förderleistung der Förderpumpe (16) aufweist.

14. Verfahren zur Überwachung einer Strömung eines flüssigen Betriebsmittels in einer Vakuumpumpe,
bevorzugt einer Vakuumpumpe nach wenigstens einem der vorhergehenden Ansprüche,
wobei das Verfahren umfasst, dass wenigstens eine Gasblase (18) detektiert wird, die in der Strömung des Betriebsmittels durch einen Förderkanal (24) der Pumpe mitströmt.

15. Verfahren nach Anspruch 14,
**dadurch gekennzeichnet, dass**
wenigstens eine die Strömung im Förderkanal (24) charakterisierende Größe anhand der Gasblase (18) bestimmt wird,
wobei, bevorzugt, die Strömungsgeschwindigkeit der Gasblase (18) bestimmt und angenommen wird, dass die Strömungsgeschwindigkeit des Betriebsmittels der Strömungsgeschwindigkeit der Gasblase (18) entspricht.

## Claims

1. A vacuum pump comprising
at least one conveying passage (24) for a liquid operating medium; and a measurement device (20) by means of which at least one gas bubble (18) flowing along in the operating medium is detectable.

2. A pump in accordance with claim 1,
**characterized in that**
a single gas bubble (18) is detectable.

3. A pump in accordance with claim 1 or claim 2,
**characterized in that**
the measurement device (20) has at least one sensor (34, 36, 66) by means of which the gas bubble (18) can be detected optically or thermally.

4. A pump in accordance with any one of the preceding claims,
**characterized in that**
the measurement device (20) is configured, by means of the gas bubble (18), to determine at least one physical parameter characterizing the flow in the conveying passage (24) such as, for instance, a flow speed, a volume flow and/or a mass flow.

5. A pump in accordance with any one of the preceding claims,
**characterized in that**
the measurement device (20) is configured to detect the gas bubble (18) when it flows through a first section (38) and when it flows through a second section (40) of the conveying passage (24) that is disposed downstream of the first conveying passage section (38) and in doing so to measure the time duration between the respective detection of the gas bubble (18).

6. A pump in accordance with claim 5,
**characterized in that**
the measurement device (20) is configured to determine the flow speed of the gas bubble (18) and/or of the operating medium in dependence on a distance between the two conveying passage sections (38, 40) and on the time duration, in particular as a quotient of the distance and the time duration.

7. A pump in accordance with any one of the preceding claims,
**characterized in that**
the measurement device (20) is configured to measure the flow speed of the gas bubble (18) in at least one section of the conveying passage (24).

8. A pump in accordance with claim 6 or claim 7,
**characterized in that**
the measurement device (20) is configured to calculate a volume flow and/or a mass flow of the operating medium by means of the product of the flow sped and the cross-sectional area, that is in particular constant, of the conveying passage (24).

9. A pump in accordance with any one of the preceding claims,
**characterized in that**
a gas bubble generation device (58) is provided to generate gas bubbles that in particular occur singly.

10. A pump in accordance with any one of the preceding claims,
**characterized in that**
a side passage (60) opening into the conveying passage (24) is provided to generate the gas bubbles (18),
that is connected or connectable to a gas source, in particular for barrier gas; and/or
that has a capillary (62) in the region of its opening into the conveying passage (24); and/or
that has at least one stop member (64).

11. A pump in accordance with at least one of the preceding claims,
**characterized in that**
it has a rotor (10) and a pivot bearing (12) that can be supplied with the operating medium via the conveying passage (24) for a rotatable assistance of the rotor (10).

12. A pump in accordance with claim 11,
**characterized in that**
the rotor (10) has a conveying section, in particular a conical conveying section (14), for conveying the operating medium to the pivot bearing (12); and **in that** the conveying passage (24) has an outlet (22) for the operating medium in the environment of the conveying section (14), with, preferably, the conveying section (14) having an outer diameter becoming larger toward the pivot bearing (12).

13. A pump in accordance with any one of the preceding claims,
**characterized in that**
a conveying pump (16) for conveying the operating medium is arranged in the conveying passage (24); and/or **in that** the conveying passage (24) is connected to an operating medium store,
with, preferably, the conveying pump (16) having means for setting the conveying power of the conveying pump (16).

14. A method of monitoring a flow of a liquid operating medium in a vacuum pump,
preferably in a vacuum pump in accordance with at least one of the preceding claims,
with the method comprising at least one gas bubble (18) being detected that flows along in the flow of the operating medium through a conveying passage (24) of the pump.

15. A method in accordance with claim 14,
**characterized in that**
at least one parameter characterizing the flow in the conveying passage (24) is determined by means of the gas bubble (18),
with, preferably, the flow speed of the gas bubble (18) being determined and with it being assumed that the flow speed of the operating medium corresponds to the flow speed of the gas bubble (18).

## Revendications

1. Pompe à vide, comportant
au moins un canal d'alimentation (24) destiné à un fluide de travail liquide, et
un moyen de mesure (20) permettant de détecter au moins une bulle de gaz (18) s'écoulant dans le fluide de travail.

2. Pompe selon la revendication 1,
**caractérisée en ce que**
il est possible de détecter une bulle de gaz individuelle (18).

3. Pompe selon la revendication 1 ou 2,
**caractérisée en ce que**
le moyen de mesure (20) comprend au moins un capteur (34, 36, 66) permettant de détecter la bulle de gaz (18) par voie optique ou thermique.

4. Pompe selon l'une des revendications précédentes,
**caractérisée en ce que**
le moyen de mesure (20) est réalisé pour déterminer au moins une grandeur physique caractérisant l'écoulement dans le canal d'alimentation (24), telle qu'une vitesse d'écoulement, un flux volumique et/ou un flux massique, en se basant sur la bulle de gaz (18).

5. Pompe selon l'une des revendications précédentes,
**caractérisée en ce que**
le moyen de mesure (20) est réalisé pour détecter la bulle de gaz (18) lorsqu'elle traverse respectivement une première portion (38) et une seconde portion (40) du canal d'alimentation (24) qui se trouve en aval de la première portion (38) du canal d'alimentation, et pour mesurer ainsi la période temporelle entre la détection respective de la bulle de gaz (18).

6. Pompe selon la revendication 5,
**caractérisée en ce que**
le moyen de mesure (20) est réalisé pour déterminer la vitesse d'écoulement de la bulle de gaz (18) et/ou du fluide de travail en fonction d'une distance entre les deux portions (38, 40) du canal d'alimentation et de la période temporelle, en particulier à titre de quotient de la distance et de la période temporelle.

7. Pompe selon l'une des revendications précédentes,
**caractérisée en ce que**
le moyen de mesure (20) est réalisé pour mesurer la vitesse d'écoulement de la bulle de gaz (18) dans au moins une portion du canal d'alimentation (24).

8. Pompe selon la revendication 6 ou 7,
**caractérisée en ce que**
le moyen de mesure (20) est réalisé pour calculer un flux volumique et/ou un flux massique du fluide de travail en se basant sur le produit de la vitesse d'écoulement et de la surface de section transversale, en particulier constante, du canal d'alimentation (24).

9. Pompe selon l'une des revendications précédentes,
**caractérisée en ce que**
il est prévu un dispositif de génération de bulles de gaz (58) pour générer des bulles de gaz apparaissant en particulier individuellement.

10. Pompe selon l'une des revendications précédentes,
**caractérisée en ce que**
pour générer des bulles de gaz (18), il est prévu un canal latéral (60) débouchant dans le canal d'alimentation (24),
qui est raccordé ou susceptible d'être raccordé à une source de gaz, en particulier de gaz de barrage, et/ou
qui comprend un capillaire (62) au niveau de son embouchure dans le canal d'alimentation (24), et/ou
qui comprend au moins un organe d'arrêt (64).

11. Pompe selon l'une des revendications précédentes,
**caractérisée en ce que**
celle-ci comprend un rotor (10) et un palier tournant (12) qui est susceptible d'être alimenté en le fluide de travail via le canal d'alimentation (24) pour le support rotatif du rotor (10).

12. Pompe selon la revendication 11,
**caractérisée en ce que**
le rotor (10) comprend une portion d'alimentation (14) en particulier conique pour alimenter le fluide de travail jusqu'au palier tournant (12), et le canal d'alimentation (24) présente une sortie (22) pour le fluide de travail à proximité de la portion d'alimentation (14),
dans laquelle la portion d'alimentation (14) comprend de préférence un diamètre extérieur qui augmente vers le palier tournant (12).

13. Pompe selon l'une des revendications précédentes,
**caractérisée en ce que**
une pompe d'alimentation (16) pour alimenter le fluide de travail est agencée dans le canal d'alimentation (24) et/ou le canal d'alimentation (24) est raccordé à un réservoir à fluide de travail,
et de préférence la pompe d'alimentation (16) comprend des moyens pour régler le débit d'alimentation de la pompe d'alimentation (16).

14. Procédé pour surveiller un écoulement d'un fluide de travail liquide dans une pompe à vide,
de préférence une pompe à vide selon l'une des revendications précédentes,
dans lequel le procédé inclut de détecter au moins une bulle de gaz (18) qui s'écoule dans l'écoulement du fluide de travail à travers un canal d'alimentation (24) de la pompe.

15. Procédé selon la revendication 14,
**caractérisé en ce que**
on définit au moins une grandeur caractérisant l'écoulement dans le canal d'alimentation (24) en se basant sur la bulle de gaz (18),
et, de préférence, on définit la vitesse d'écoulement de la bulle de gaz (18) et on suppose que la vitesse d'écoulement du fluide de travail correspond à la vitesse d'écoulement de la bulle de gaz (18).
